# EUROPÄISCHE PATENTSCHRIFT

(11) **EP 3 739 291 B1**
(45) Veröffentlichungstag und Bekanntmachung des Hinweises auf die Patenterteilung: **07.05.2025**
(21) Anmeldenummer: 19175241.9
(22) Anmeldetag: 17.05.2019
(51) Int. Cl.: G01C 15/00, G01C 21/20, G01C 11/02, G01C 1/04, G06T 7/30, G06T 7/20, G06T 7/246, G06T 7/33, G06T 7/73, G06V 20/10

(54) **VOLLAUTOMATISCHES POSITIONS- UND ORIENTIERUNGSBESTIMMUNGSVERFAHREN FÜR EINEN TERRESTRISCHEN LASERSCANNER**
FULLY AUTOMATIC POSITION AND ORIENTATION DETECTION METHOD FOR TERRESTRIAL LASER SCANNER
PROCÉDÉ DE DÉTERMINATION AUTOMATIQUE DE LA POSITION ET DE L'ORIENTATION POUR UN BALAYEUR LASER TERRESTRE

(43) Veröffentlichungstag der Anmeldung: 18.11.2020
(73) Patentinhaber: Hexagon Technology Center GmbH, 9435 Heerbrugg (CH)
(72) Erfinder: METZLER, Bernhard, A-6850 Dornbirn (AT)
(74) Vertreter: Kaminski Harmann

(56) Entgegenhaltungen:
- US-A1- 2016 146 604
- US-A1- 2016 187 130
- US-A1- 2017 301 132
- US-A1- 2018 158 200

## Beschreibung

Die Erfindung betrifft ein Positions- und Orientierungsbestimmungsverfahren für ein terrestrisches Vermessungsgerät mit Scanfunktionalität nach Anspruchs 1, ein ebensolches Vermessungsgerät nach Anspruch 14 und ein ebensolches Computerprogrammprodukt nach Anspruch 15.

3D-Scannen ist eine sehr wirkungsvolle Technologie um innerhalb von Minuten oder Sekunden Millionen von räumlichen Messpunkten von Objekten zu produzieren. Typische Messaufgaben sind die Aufnahme von Objekten bzw. deren Oberflächen wie Industrieanlagen, Häuserfassaden oder historischen Gebäuden aber auch von Unfallorten und Verbrechensszenen. Vermessungsgeräte mit Scanfunktionalität sind beispielsweise Laserscanner wie der Leica P20 oder eine Total- oder Multistation wie z.B. die Leica Multi Station 50, welche verwendet werden, um 3D-Koordinaten von Oberflächen zu messen bzw. zu erstellen. Zu diesem Zweck müssen sie in der Lage sein, den Messstrahl einer Entfernungsmessvorrichtung über eine Oberfläche zu führen und dabei gleichzeitig Richtung und Entfernung zum Messpunkt zu erfassen. Aus der Entfernung und der damit korrelierten Richtungsinformation für jeden Punkt wird mittels Datenverarbeitung eine sogenannte 3D-Punktwolke generiert.

Vom prinzipiellen Aufbau her sind derartige terrestrische Scanner also ausgebildet, um mit einem, meist elektrooptischen und laserbasierten, Entfernungsmesser eine Distanz zu einem Objektpunkt als Messpunkt zu erfassen. Eine ebenfalls vorhandene Richtungs-Ablenkeinheit ist dabei derart ausgebildet, dass der Messstrahl des Entfernungsmessers in zumindest zwei unabhängige Raumrichtungen abgelenkt wird, wodurch ein räumlicher Messbereich aufgenommen werden kann.

Der Entfernungsmesser kann beispielsweise nach den Prinzipien der Time-Of-Flight- (TOF), Phasen-, Wave-Form-Digitizer- (WFD) oder interferometrischen Messung ausgeführt sein. Für schnelle und genaue Scanner ist insbesondere eine kurze Messzeit bei gleichzeitig hoher Messgenauigkeit gefordert, beispielsweise eine Distanzgenauigkeit im µm-Bereich oder darunter bei Messzeiten der Einzelpunkte im Bereich von Sub-Mikrosekunden bis Millisekunden. Der Messbereich reicht dabei von wenigen Zentimetern bis hin zu einigen Kilometern.

Die Ablenkeinheit kann in Form eines bewegten Spiegels oder alternativ auch durch andere, zur gesteuerten Winkelablenkung von optischer Strahlung geeignete Elemente, wie beispielsweise verdrehbare Prismen, bewegliche Lichtleiter, verformbare optische Komponenten etc. realisiert werden. Die Messung erfolgt meist unter Bestimmung von Entfernung und Winkeln, also in Kugelkoordinaten, welche zur Darstellung und Weiterverarbeitung auch in kartesische Koordinaten transformiert werden können.

Um die gemessenen Objektpunktkoordinaten in Bezug zu einem bekannten Referenzkoordinatensystem zu setzen oder anders gesagt, absolute Punktkoordinaten zu erhalten, muss der Standort des Vermessungsgeräts absolut bekannt sein. Grundsätzlich können die Stationskoordinaten des Vermessungsgeräts vor Ort als sogenannte freie Stationierung durch Erfassen von bereits absolut referenzierten Punkten ermittelt werden. Beispielsweise werden mehrere in der Messumgebung vorhandene Zielpunkte bekannter Position beim Scan erfasst, wodurch auch die Orientierung oder Ausrichtung des Geräts ermittelbar ist. Eine derartige Referenzierung erfordert jedoch üblicherweise zumindest eine teilweise manuelle Durchführung, was zeitaufwändig und fehleranfällig ist.

Die Live-Position des Vermessungsgeräts ist alternativ mittels einen am Vermessungsgerät angebrachten GNSS-Empfänger über einzelne Satelliten als Referenzpunkte bestimmbar. Nachteilig ist allerdings das geringere Auflösungsvermögen, insbesondere hinsichtlich der Höhenbestimmung, verglichen mit einer Referenzierung mittels geodätischer Vermessung. Zudem ist eine Bestimmung der Ausrichtung des Scanners nur mit mehreren Empfängern möglich und dies zudem mit noch geringerem Auflösungsvermögen. Vor allem ist der Vorgang an den Empfang von GNSS-Signalen gebunden, der vor allem im Innenbereich oder in engen, verwinkelten Messumgebungen kaum oder nicht gegeben ist.

Auch sind bildbasierte Referenzierungsverfahren bekannt. Die EP 2199828 A2 beispielsweise schlägt ein Verfahren im Rahmen von Mobile Scanning vor, mit welchem aus zwei unter verschiedenen Winkelstellungen aufgenommenen 3D-Abbildern eines Umgebungsbereichs die Lage des Vermessungsgeräts relativ zu einem (Bewegungs-)Referenzsystem bestimmt wird. Nachteilig hierbei ist jedoch, dass mit dem Erstellen von mindestens zwei 3D-Abbildern aus unterschiedlichen Winkelstellungen immer noch ein recht hoher Aufwand vonnöten ist.

In der DE 102013110581 A1 wird ein gattungsgemässer Laserscanner beschrieben, der zum Zwecke der Verfolgung eines Positionswechsels zwischen zwei Messungen in einer Messumgebung eine Inertialmesseinheit (IMU) aufweist. Nachteilig an dieser Lösung sind die Notwendigkeit, eine entsprechend empfindliche Inertialmesseinheit in den Laserscanner einzubauen, sowie die Einschränkung, dass damit nur der zeitlich unterbrechungsfreie Wechsel zwischen zwei Standorten verfolgt werden können, nicht jedoch eine Bestimmung der aktuellen Position in der Messumgebung, wenn z.B. nach einer längeren Zeit wie Stunden, Tage, Wochen oder länger erneut in der Messumgebung ein Scannen erfolgen soll.

Die US 2016/0187130 A1 offenbart ein Verfahren zum präzisen Bestimmen des Positionsversatzes und Orientierungsversatzes einer zweiten Stationierung zu einer ersten Stationierung eines Vermessungsgeräts anhand von abbildbasiert bestimmten Richtungen und einer laseroptisch gemessenen Entfernung zu Messumgebungspunkten, welche sowohl in einem zweiten als auch in einem ersten Umgebungsabbild der Messumgebung abgebildet sind.

Die US 2016/146604 A1 lehrt ein Verfahren zum Bestimmen der Positionsdaten eines Vermessungsgeräts durch Abgleichen einer aus den Daten eines Abbildes der Umgebung der Vermessungsgerätposition extrahierten Bezugsdatenmenge mit positionsreferenzierten Datenmengen und Ermitteln der Positionsdaten anhand von Positionsreferenz derjenigen ausgewählten positionsreferenzierten Datenmenge, die ein vergleichsweise bedeutendes Mass an Übereinstimmung mit der Bezugsdatenmenge aufweist.

Die US 2017/301132 A1 betrifft ein Verfahren zum Rendern von 3D-Laserscandaten mit sog. cube maps.

Die US 2018/158200 A1 offenbart ein Punktwolkenregistrierungsverfahren unter Verwendung eines SLAM-Prozesses.

Die Aufgabe der vorliegenden Erfindung besteht daher in der Bereitstellung eines vereinfachten, vollautomatischen Positionsbestimmungsverfahrens für ein terrestrisches Scan-Vermessungsgerät.

Diese Aufgabe wird erfindungsgemäss durch die kennzeichnenden Merkmale der unabhängigen Ansprüche oder durch Merkmale der abhängigen Ansprüche gelöst bzw. diese Lösungen weitergebildet.

Die vorliegende Erfindung betrifft ein vollautomatisches Verfahren zum Bestimmen der aktuellen georeferenzierten Position und Ausrichtung eines terrestrischen Vermessungsgeräts mit Scanfunktionalität am aktuellen Standort anhand eines Satzes von hinterlegten georeferenzierten 3D-Scan-Panoramabildern, also von Panoramabildern, die mittels Scan auch 3D-Koordinatendaten repräsentieren. Die 3D-Scan-Panoramabildern sind beispielsweise in einem Computerspeicher des Vermessungsgeräts selbst hinterlegt oder auf einem externen Speichermedium, -z.B. einer Cloud- von welchem sie vom Vermessungsgerät beispielsweise mittels Bluetooth, Internet oder WLAN abgerufen werden. Die Durchführung des Verfahrens erfolgt vorzugsweise auf einem Rechner des Vermessungsgeräts selbst; das Prozessieren kann aber auch extern erfolgen, z.B. auf einem externen Computer oder in einer Cloud, von wo aus die berechneten Daten an das Vermessungsgerät übertragen werden.

Das Verfahren beinhaltet ein Aufnehmen eines Panoramabilds mit dem Vermessungsgerät vom aktuellen Standort aus, wobei im aufgenommenen Panoramabild eine Vielzahl von Objektpunkten abgebildet ist. Ein Panoramabild kann dabei beispielsweise mittels eines Superweitwinkelobjektivs aufgenommen oder durch einen Rundumkameraschwenk erstellt bzw. aus mehreren in verschiedene Richtungen aufgenommenen Einzelbildern zusammengesetzt werden.

Weiter erfolgt mittels image matching, beispielsweise mittels feature oder keypoint matching oder unter Anwendung von machine oder deep learning, ein Identifizieren wenigstens eines 3D-Scan-Panoromabilds mit zum aufgenommenen Panoramabild übereinstimmenden Objektpunkten. Übereinstimmenende Objektpunkte werden optional mittels feature matching-Algorithmen, insbesondere anhand von SIFT-, SURF-, ORB- oder FAST-Algorithmen, ermittelt.

Als weiterer Schritt erfolgt ein Bestimmen (z.B. Abrufen oder Berechnen) der jeweiligen georeferenzierten 3D-Koordinaten der übereinstimmenden Objektpunkte anhand des identifizierten 3D-Scan-Panoramabilds und Berechnen, z.B. mittels Rückwärtsschnitt, der aktuellen georeferenzierten Position und Ausrichtung des Vermessungsgeräts anhand der Positionen der übereinstimmenden Objektpunkte im aufgenommenen Panoramabild und deren bestimmten georeferenzierten 3D-Koordinaten.

Optional stellen die hinterlegten 3D-Scan-Panoramabilder in jeweilige 2D-Panoramabilder, beispielsweise Farbbilder mit einer "Auflösung" von 360*180 Pixeln, eingebettete oder verknüpfte 3D-Punktwolken dar, wobei die 2D-Panoramabilder auch als einzelne 2D-Bilder ausgebildet sein können, die z.B. mittels Stitching zusammengesetzt die Panoramaansicht ergeben. Alternativ oder zusätzlich sind die hinterlegten 3D-Scan-Panoramabilder in Form von Würfel- oder Kugelprojektionen, z.B. mit Farbkanal und kombiniertem Tiefenkanal, hinterlegt. Beim am aktuellen Standort aufgenommenen Panoramabild hingegen handelt es sich vorzugsweise um ein "einfaches" 2D-(Digitalkamera-)Bild, was eine vergleichsweise einfache, schnelle und unaufwändige Bildakquirierung mit dem Vermessungsgerät vor Ort ermöglicht.

Bevorzugt handelt es sich bei dem Satz hinterlegter 3D-Scan-Panoramabilder um räumlich untereinander verknüpfte und einen zusammengehörigen/eine Einheit bildenden Umgebungsbereich darstellende Bilder, wobei es sich bei dem Umgebungsbereich z.B. um eine Industrieanlage, ein Gebäude oder einen Gebäudekomplex handelt. Der Satz der 3D-Scan-Panoramabilder stellt also eine zusammengehörige Sammlung von Referenzbildern dar, die alle auf eine bestimmte Umgebung oder ein bestimmtes Objekt bezogen sind, z.B. auf ein Werk, ein Gebäudecluster, ein Gebäudestockwerk oder ein zusammenhängendes Gelände. Die hinterlegten 3D-Panoramabilder sind beispielsweise aus einer -z.B. in einer Cloud hinterlegten- Datenbank abrufbar, welche spezifisch der vorliegenden Messumgebung bzw. dem vorliegenden Objekt zugeordnet ist.

Als Option erfolgt im Rahmen des Verfahrens eine Bewegung des Vermessungsgeräts vom aktuellen Standort aus entlang eines Pfades zu einem weiteren Standort, wobei während der Bewegung mit dem Vermessungsgerät im Rahmen eines SLAM-Prozesses (Simultaneous Localization And Mapping) kontinuierlich eine Serie von Bildern aufgenommen wird, wobei das identifizierte 3D-Scan-Panoramabild als ein, insbesondere erstes, Bild der Bilderserie herangezogen wird, Fertigstellen des SLAM Prozesses am weiteren Standort durch Aufnehmen eines letzten Bilds der Bilderserie, Aufnehmen einer 3D-Punktwolke am weiteren Standort und Registrieren der 3D-Punktwolke basierend auf dem SLAM Prozess relativ zum identifizierten 3D-Scan-Panoramabild. Es wird also die Punktwolke, welche an einer weiteren Stationierung durch Laserscan erzeugt wird, unter Verwendung von mittels eines SLAM-Algorithmus verknüpften Kamerabildern zum 3D-Scan-Panoramabild registriert. Das Heranziehen des 3D-Scan-Panoramabilds im Rahmen des SLAM-Prozesses bietet dabei u.a. den Vorteil, dass von vorneherein mit 3D-Daten verknüpfte Bildpunkte vorliegen.

In einer Fortbildung des Verfahrens wird die Anzahl der zur Standortbestimmung heranzuziehenden hinterlegten (und identifizierten) 3D-Scan-Panoromabilder an die vorliegende Messsituation angepasst.

Optional wird im Rahmen der Anpassung die Anzahl der zur Standortbestimmung heranzuziehenden hinterlegten 3D-Scan-Panoromabilder eingestellt abhängig von einem Ähnlichkeitsmass zwischen aufgenommenem Panoramabild und identifiziertem 3D-Scan-Panoromabild, wobei das Ähnlichkeitsmass auf einer Zahl an übereinstimmenden Objektpunkten basieren kann. Das Ähnlichkeitsmass stellt beispielsweise ein Mass für einen Lageunterschied zwischen aktuellem Standort und Aufnahmestandort des identifizierten 3D-Scan-Panoromabilds dar.

Als weitere Option wird im Rahmen der situativen Anpassung die Anzahl der zur Standortbestimmung heranzuziehenden hinterlegten 3D-Scan-Panoromabilder eingestellt abhängig von einer anhand des aufgenommenen Panoramabilds bestimmten Beschaffenheit der Umgebung des Standorts, insbesondere eine Mindestdistanz oder mittlere Distanz zu Objektpunkten.

Optional wird im Rahmen der Anpassung die Anzahl der zur Standortbestimmung heranzuziehenden hinterlegten 3D-Scan-Panoromabilder eingestellt abhängig von einem gewünschten Präzisionsmass für den aktuellen Standort. Die Anzahl der Referenzbilder, auf der die Positions- bzw. Ausrichtungsbestimmung basiert, wird also an ein gefordertes Genauigkeitslevel angepasst.

Die Erfindung betrifft weiter ein terrestrisches Vermessungsgerät mit Scanfunktionalität mit einer Steuer- und Auswerteeinheit welche derart ausgebildet ist, dass damit das erfindungsgemässe Verfahren ausführbar ist.

Zudem betrifft die Erfindung ein Computerprogrammprodukt, das auf einem maschinenlesbaren Träger, insbesondere eines terrestrischen Vermessungsgeräts mit Scanfunktionalität, gespeichert ist, oder Computer-Datensignal, verkörpert durch eine elektromagnetische Welle, mit Programmcode, der geeignet ist zur Durchführung des erfindungsgemässen Verfahrens.

Das erfindungsgemässe Verfahren bietet den Vorteil eines einfachen Verfahrens, mit dem vollautomatisch direkt am Standort, in Echtzeit und bereits vor Start des eigentlichen Scanvorgangs Position und Orientierung eines scannenden Vermessungsgeräts bei Neustationierung in einer bereits wenigstens zum Teil scantechnisch erfassten Messumgebung bestimmt werden kann. Beispielsweise ist mittels des Verfahrens ermöglicht, den eigenen Standort zu berechnen, lediglich anhand eines, z.B. mit einer gewöhnlichen Digitalkamera des Scanners vor Ort aufgenommenen Panoramabilds. Damit ist u.a. eine Staffelung von Setups noch vor Ort auch bei Unterbrechung der Messtätigkeit zwischen zwei Setups möglich. Auch ist vorteilhaft eine genaue Standortbestimmung im Innern von Gebäuden oder z.B. in Tunneln möglich.

Der Aufwand vor Ort kann dabei insbesondere dadurch gering gehalten werden, dass mit den georeferenzierten 3D-Scan-Panoramabildern eine besonders reichhaltige Datenquelle "angezapft" wird, welche bereits auf Grundlage eines einfachen Live-Bilds, wie z.B. ein digitales Kamera-Panoramabild, ein robustes und durch Berechnen präzises Ermitteln der aktuellen Position und zudem noch der Ausrichtung ermöglicht. Mit anderen Worten ist die Daten-"Last" in die heranzuziehende Datenbank verlagert und mit dem Laserscanner selbst muss vorteilhaft nur noch ein "light"-Bild der Messumgebung aufgenommen werden.

Aufgrund der vorhandenen dreidimensionalen Punktdaten ist dabei von vorneherein eine Skalierung gegeben oder bereitgestellt, wodurch vorteilhaft auch kein zusätzlicher Aufwand zur Ermittlung eines Skalierungsfaktors, z.B. durch Vermessen, Scannen oder Erfassen eines Objekts bekannter Grösse (z.B. eine Messlatte), erforderlich ist.

Mittels der Option der ebenfalls vollautomatischen Anpassung des Verfahrens an die konkret vorliegende Messsituation, z.B. Genauigkeitserfordernisse, Art der Messumgebung oder Nähe zu einem Referenzstandort, kann das Verfahren auf den tatsächlichen Bedarf zugeschnitten werden. Dadurch ergibt sich eine massgeschneiderte Optimierung des Prozessaufwands und -ergebnisses, ohne dass hierbei Benutzereingriffe notwendig wären. Beispielsweise lässt sich damit das Verfahren so schlank wie möglich halten.

Das erfindungsgemässe Positions- und Ausrichtungsbestimmungsverfahren sowie der erfindungsgemässe Scanner werden nachfolgend anhand von in der Zeichnung schematisch dargestellten Ausführungsbeispielen rein beispielhaft näher beschrieben.

Im Einzelnen zeigen
- Fig.1: ein terrestrisches gattungsgemässen Vermessungsgerät, ausgebildet als Laserscanner,
- Fig.2: ein Beispiel für ein erfindungsgemässes 3D-Scan-Panoramabild,
- Fig.3: ein Beispiel für Anwendung des erfindungsgemässen Verfahrens in einer Messumgebung,
- Fig.4: ein weiteres Beispiel für Anwendung des erfindungsgemässen Verfahrens in einer Messumgebung,
- Fig.5: ein Beispiel für einen weiteren Verlauf erfindungsgemässen Verfahrens,
- Fig.6: ein weiteres Beispiel für einen weiteren Verlauf erfindungsgemässen Verfahrens,
- Fig.7: ein schematisches Beispiel für eine erfindungsgemässe Fortbildung des Verfahrens, und
- Fig. 8: ein Beispiel für eine Fortbildung des erfindungsgemässen Verfahrens zur Registrierung einer Punktwolke an einem weiteren Standort.

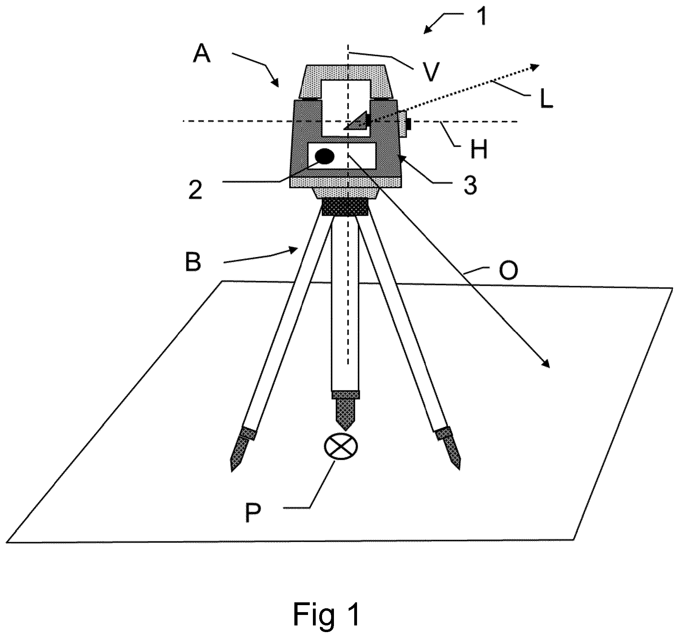

Figur 1 zeigt einen terrestrisches gattungsgemässes Vermessungsgerät, welches ausgebildet sein kann z.B. als Totalstation mit Scanfunktionalität bzw. Scanmodul oder wie dargestellt als Laserscanner 1, zum Aufnehmen (Scannen) von Objektoberflächen von einer Stationierung aus, mit einer Position P und einer Ausrichtung oder Orientierung O, welche mittels des weiter unten erläuterten Verfahrens bestimmt werden können.

Das Gerät 1 weist eine, beispielsweise intensitätsmodulierte, z.B. gepulste, Strahlungsquelle auf (nicht dargestellt), z.B. eine Laserquelle, und eine Optik (nicht dargestellt), so dass ein Messstrahls L in den freien Raum auf ein Zielobjekt in eine Emissionsrichtung emittierbar ist, wobei die Emissionsrichtung eine Messachse definiert und durch einen oder mehrere Positions-/Winkeldetektoren (nicht dargestellt) die jeweils vorliegende Richtung der Emission bzw. der Messachse im internen Bezugssystem des Scanners 1 gemessen wird (also relativ zu einer internen Nullrichtung). Die Optik ist beispielsweise als eine kombinierte Sende- und Empfangsoptik ausgeführt oder weist je eine separate Sendeoptik und Empfangsoptik auf. Hierbei werden vom Zielobjekt reflektierte Lichtpulse vom Vermessungsgerät 1 empfangen und von einem opto-elektronischen Detektor (nicht dargestellt) erfasst. Hierbei können beispielsweise bis zu einer Million oder mehr Lichtpulse pro Sekunde und damit Abtastpunkte 98 erfasst werden.

Zum scannenden Abtasten des Objekts wird die Messstrahlung L bzw. Emissionsrichtung fortlaufend verschwenkt und gemessen sowie sukzessive in kurzen Zeitabständen jeweils wenigstens ein Messwert pro Objektpunkt aufgenommen, darunter jedenfalls ein Entfernungswert zum jeweiligen Scanpunkt im internen Bezugssystem, so dass eine Vielzahl von Scanpunkten erzeugt wird, welche als dreidimensionale Punktwolke ein 3D-Abbild des Objekts bzw. der Messumgebung bilden. Es werden also zu einem jeweiligen Objektpunkt Scandaten generiert, welche zumindest Winkel- bzw. Richtungs- und Distanzinformation enthalten. Zum Messen des Entfernungswerts weist das Vermessungsgerät 1 eine elektronische Steuerung auf (nicht dargestellt), welche eine Auswertefunktionalität umfasst zur Messung des jeweiligen Entfernungswerts z.B. nach dem Laufzeitprinzip (Auswertung nach der Time-of-Flight-Methode).

Das Verschwenken erfolgt dabei mittels eines Strahlumlenkers 3, wie dargestellt beispielsweise, indem ein Aufsatz- oder Oberteil A des Vermessungsgeräts 1 gegenüber einer Basis B - relativ langsam- um eine erste, vertikale Achse V schrittweise oder kontinuierlich rotiert wird, so dass die Messstrahlung L in der Horizontalen verschwenkt wird und sich die Vielzahl von Emissionsrichtungen untereinander in der horizontalen Ausrichtung unterscheiden, und indem ein verschwenkbares optisches Bauteil, z.B. ein Schwenk- oder Drehspiegel, -relativ schnell- um eine horizontale Achse H rotiert wird, so dass die Messstrahlung L in der Vertikalen verschwenkt wird und sich die Vielzahl von Emissionsrichtungen untereinander zusätzlich in der vertikalen Ausrichtung unterscheiden. Dadurch wird die Objektoberfläche z.B. mit einem Linienraster zeilenweise gescannt. Das Scannen erfolgt innerhalb eines vorbestimmten Winkelbereichs, dessen Grenzen durch eine horizontale und vertikale Verschwenkungsbreite festgelegt ist. Dabei beträgt der Winkelbereich in der Horizontalen 360°, und in der Vertikalen z.B. 270°, so dass ein kugelförmiger Scanbereich vorliegt, welcher beinahe den gesamten Umgebungsbereich in alle Raumrichtungen abbildet. Es sind aber auch beliebige andere Winkelbereiche möglich. Ebenso gibt es Realisierungsformen bei der die vertikale Auflösung nicht durch eine zusätzliche Drehachse realisiert wird, sondern durch mehrere, simultan arbeitende Sende- und Empfangseinheiten, die einen bestimmten konstanten Winkelversatz in vertikaler Richtung besitzen.

Daneben weist der Laserscanner 1 wenigstens eine Bildkamera 2 auf, mit der optische Bilder des Objekts bzw. der Messumgebung aufgenommen werden können, vorzugsweise Farbbilder im RGB-Format. Mittels der Kamera 2 ist ein (2D-)Panoramabild erzeugbar. Ein Panoramabild kann z.B. erzeugt werden, indem mehrere Bilder bei Verschwenken mit der Verschwenkvorrichtung 3 um 360° aufgenommen und zusammengefügt werden. Alternativ weist der Laserscanner 1 mehrere in verschiedene Blickrichtungen ausgerichtete Kameras 2 auf, deren jeweilige Bilder zu einem Panoramabild zusammensetzbar sind.

Ein georeferenziertes 3D-Scan-Panoramabild, welches erfindungsgemäss für nachfolgende Positions- und Ausrichtungsbestimmung bei Neustationierung als Grundlage dient, entsteht dadurch, dass das Ergebnis des 360°-Scans bzw. die erzeugte 3D-Punktwolke und das kamerabasierte 360°-(2D-)Panoramabild einer georeferenzierten Stationierung kombiniert werden, so dass ein 3D-Scan-Panoramabild oder eine texturierte 3D-Punktwolke entsteht, wobei optional auch beispielsweise ein Helligkeits- oder Intensitätswert (z.B. ein Graustufenwert) der Messstrahlung L selbst beim Scannen aufgenommen und bei der Bilderstellung berücksichtigt wird. Durch das punktgetreue Verknüpfen der Kamerabilddaten und der Scandaten liegt somit also ein dreidimensionales Abbild des Objekts vor, das zusätzlich auch Farbinformation über das Objekt beinhaltet bzw. ein Panoramabild, welches mittels der Scandaten zusätzlich Tiefeninformation aufweist. Durch Verknüpfen des 3D-Scan-Panoramabilds mit einer Rauminformation, also durch Vorliegen eines Ortsbezugs liegt zudem eine Georeferenz vor.

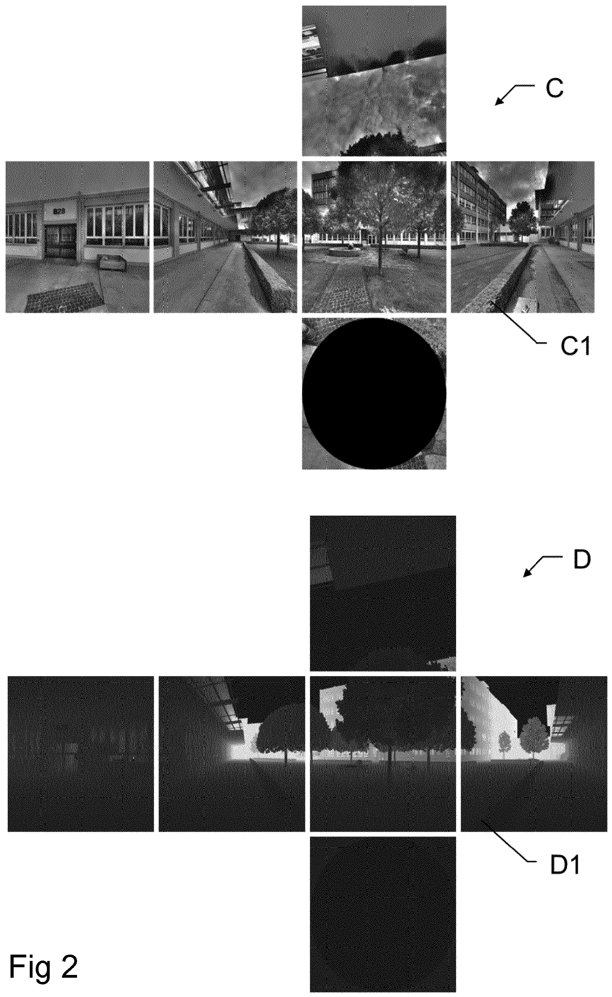

Die Figur 2 zeigt ein Beispiel für ein 3D-Scan-Panoramabild 4. Im Beispiel ist das Panoramabild 4 als sog. cube map gespeichert, d.h. als Würfeldarstellung mit sechs Teilbildern, beispielsweise das Teilbild C1 bzw. D1. Die sechs Teilbilder repräsentieren die Vorwärts-, Rückwärts, Rechts-, Links-, Auf- und Untersicht. Alternative Beispiele für Bildformate bzw. derartige image maps sind Kugel- oder Kuppelansichten bzw. -projektionen. Die Würfeldarstellung ist dabei vorzugsweise verzerrungsfrei, so dass eine geometrisch korrekte Darstellung der Scan- und Bilddaten erfolgt.

Im Beispiel ist das 3D-Scan-Panoramabild 4 in den mittels der Kamera gewonnenen Farbbildanteil C (in der Figur 2 oben) und den durch das Scannen gewonnenen 3D-Anteil D (in der Figur unten) aufgeteilt. Die jeweiligen Würfelflächen sind zusammengehörig, beispielsweise die Würfelfläche C1 des Farbanteils und die Würfelfläche D1 des 3D-Anteils. Das 3D-Scan-Panoramabild 4 wird dabei durch vier Bildkanäle beschrieben: rot, grün, blau (C) und Tiefe (D). Ein derartiges 4-Kanal-Bildformat lässt sich mit vergleichsweise geringem Aufwand speichern und prozessieren.

Ein solches 3D-Scan-Panoramabild 4 stellt somit ein informationsreiches Abbild von Messobjekten bzw. eine informationsreiche Rundumansicht einer Messumgebung dar, das nicht nur optische Bilddaten bereitstellt, sondern auch orts- bzw. punktgetreu verknüpfte Entfernungsdaten, wodurch auch automatisch und unmittelbar eine Skalierung gegeben bzw. verfügbar ist. Ein derartiges 3D-Scan-Panoramabild 4 bzw. ein Satz derartiger Bilder stellt somit auch eine sehr "mächtige" Referenzierungsbibliothek dar, welche wie im Folgenden dargestellt zur Positions- und Ausrichtungsbestimmung eines scannenden Vermessungsgeräts an einem unbekannten, neuen Standort bzw. bei einer erneuten Stationierung vorteilhaft verwendet wird.

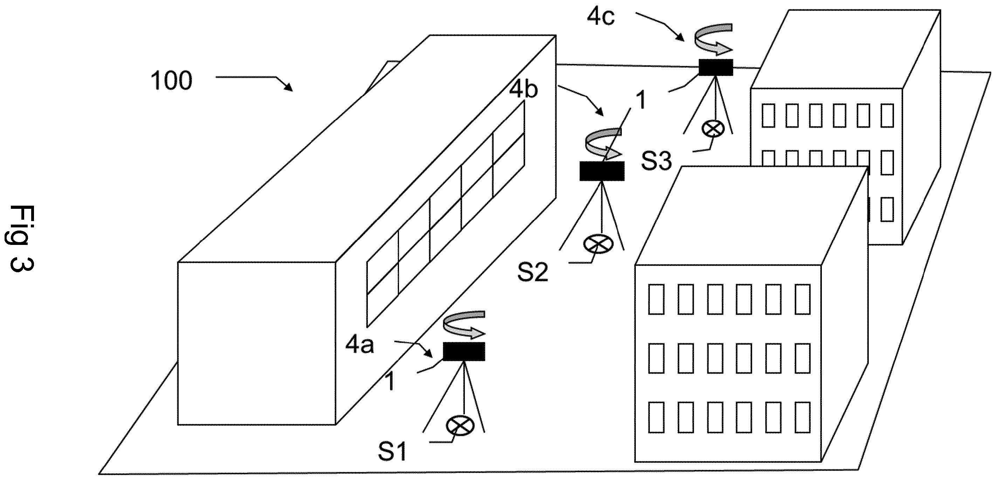

Figur 3 zeigt eine Messumgebung 100, z.B. einen Gebäudekomplex oder ein Fabrikgelände. Weitere Beispiele für einen derartigen zusammengehörigen Umgebungsbereich sind Industrieanlagen wie z.B. Raffinerien oder Werkshallen, ein abgegrenztes Terrain oder auch ein einzelnes Gebäude oder ein einzelnes Stockwerk. Der Gebäudekomplex 100 wird wie oben beschrieben von drei Standorten S1-S3 aus gescannt, wobei jeweils auch mit der Kamera des Laserscanners 1 Panoramabilder aufgenommen werden. Durch Verknüpfen der jeweiligen Scandaten mit den jeweiligen Panoramabildern werden wie beschrieben 3D-Scan-Panoramabilder erzeugt, so dass im Beispiel drei 3D-Scan-Panoramabilder 4a-4c vorliegen, welche z.B. in einer Datenbank abgelegt sind.

Die 3D-Scan-Panoramabilder 4a-4c sind dabei ausserdem georeferenziert, d.h. in Bezug gesetzt zu einem äusseren Koordinatensystem. Bei dem Koordinatensystem, zu dem Bezug genommen wird, kann es sich um ein lokales System handeln, welches z.B. durch eine Aufstellung/Stationierung des Laserscanners 1 definiert ist, oder auch ein globales übergeordnetes System, z.B. ein geodätisches Koordinatensystem wie WGS 84. Diese Georeferenzierung kann nach aus dem Stand der Technik bekannten Methoden für einen Standort S1-S3 erfolgen durch Scannen von mehreren bekannten Referenzobjekten in der Messumgebung 100.

Ein derartiges Referenzieren mit den bekannten Verfahren ist allerdings aufwändig und fehleranfällig. Deshalb wird im Rahmen der Erfindung ein Verfahren vorgeschlagen, mit dem die Information, die mit den 3D-Scan-Panoramabildern und der Georeferenz bereits vorhandener Standorte (Referenzstandorte), optimal genutzt wird, um damit die Position und Ausrichtung des Laserscanners 1 an einem neuen Standort bzw. bei erneuter Stationierung in einer Messumgebung 100 zu bestimmen. Dies wird anhand der nachfolgenden Figuren beschrieben.

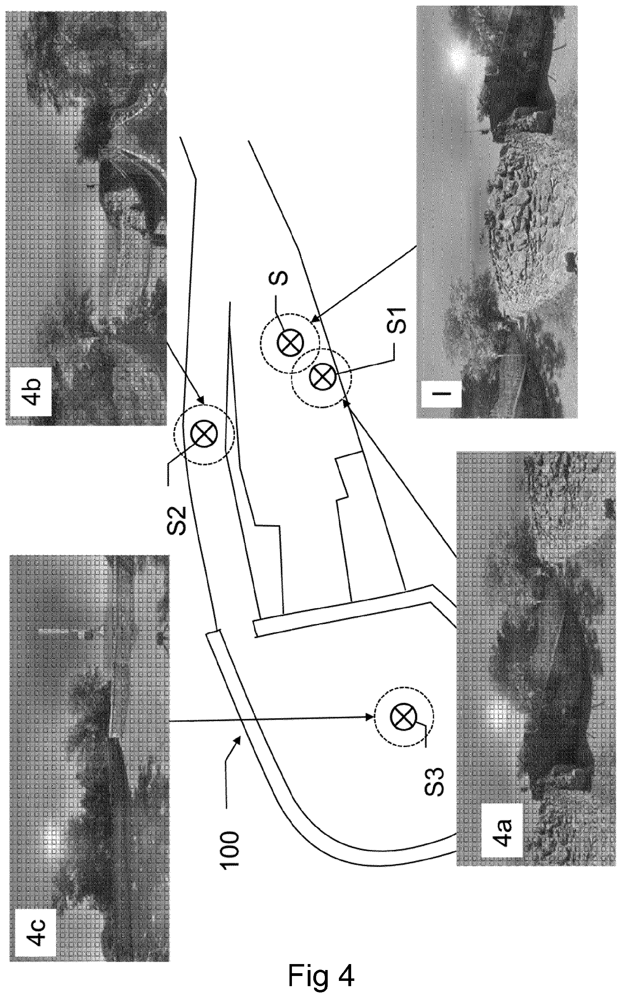

Figur 4 zeigt in Vogelperspektive eine Messumgebung 100. Darin sind die drei Referenzstandorte S1-S3 zu sehen, zu denen die drei hinterlegten georeferenzierten 3D-Scan-Panoramabilder 4a-4c gehörig sind, welche Rundumbilder sind (360°), einen Bilderreferenzsatz zur Messumgebung 100 bilden und beispielsweise in einer Datenbank per WLAN etc. vom Laserscanner abrufbar sind. Der Laserscanner wird nun am neuen bzw. zu bestimmenden Standort S positioniert, welcher als Stationierung für einen weiteren Scan dienen soll.

Um die unbekannte Position und Ausrichtung des Scanners am aktuellen Ort S zu ermitteln, wird in dieser Position und Ausrichtung mittels der Gerätekamera ein 360°-Panoramabild I aufgenommen. Bei dem Panoramabild I kann es sich um ein Monochrombild (1-Kanal) handeln oder auch durch Durchführen eines Scans vor Ort S1 und Kombination der Scandaten mit den Kamerabilddaten um ein 3D-Scan-Panoramabild (RGBD-Bild). Als weitere Alternative handelt es sich bei dem aktuellen Panoramabild um ein Bild, das -im Unterschied zum 3D-Scan-Panoramabild- nicht den Vollkreis, sondern "nur" einen grossen Betrachtungs- oder Bildwinkel von mindestens 90° abdeckt (z.B. 180°) oder mindestens in Form eines Superweitwinkelbilds vorliegt mit typisch 92°-122° diagonalem Bildwinkel oder ähnlich. Die Kamera 2 weist hierzu beispielsweise ein entsprechend weites Blickfeld auf, z.B. mittels eines Superweitwinkelobjektivs oder Fischaugenobjektiv, oder das aktuelle Bild wird aus mehreren in unterschiedlichen Blickrichtungen aufgenommenen Einzelbildern zusammengesetzt.

Im Beispiel handelt es sich jedoch um ein einfaches Kamerafarbbild (zur Unterscheidung der 3D-Scan-Bilder 4a-4c vom einfachen Kamerabild I sind in der Zeichnung 4 die 3D-Scan-Bilder 4a-4c mit einem die Scanpunkte indizierenden grafischen Muster versehen). Ein derartiges einfaches 2D-Kamerabild hat den Vorteil einer einfachen und schnellen Erstellung, wobei damit -aufgrund der Heranziehung der 3D-Scan-Panoramabilder 4a-4c als Referenz- dennoch für die weiteren Verfahrensschritte ausreichende Information über das aktuelle Setup zur robusten und ausreichend präzisen Positions- und Ausrichtungsbestimmung bereitgestellt wird. Mit anderen Worten ermöglichen die Verwendung von 3D-Scan-Panoramabilder 4a-4 als Abgleichs-/Referenzierungsgrundlage -also von Panoramabildern mit Tiefeninformation- den Aufwand zur Erstellung von abzugleichenden Daten (vor-Ort-Bild oder Live-Bild) bzw. die Anforderungen an die zu referenzierenden Daten weitgehend zu minimieren.

Basierend auf an sich bekannten Bildverarbeitungsverfahren bzw. Computer-Vision-Algorithmen erfolgt ein Matchen des aktuellen Kamerabilds I mit dem Satz von hinterlegten 3D-Scan-Bildern 4a-4c.

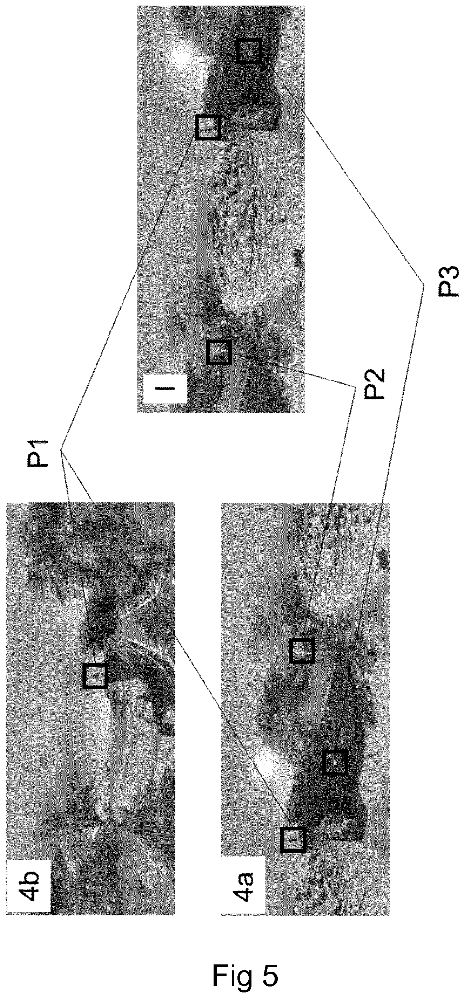

Wie in Figur 5 dargestellt, können durch das image matching ein oder mehrere der hinterlegten 3D-Scan-Bildern 4a-4c identifiziert werden, welche übereinstimmende Umgebungsobjektpunkte P1, P2, P3 aufweisen. Das matchen der 3D-Scan-Bilder 4a-4c mit dem Panoramabild I kann z.B. auf "klassischem" feature oder keypoint-matching, im Besonderen durch die Anwendung eines bag of words Ansatzes, basieren. Alternativ oder zusätzlich erfolgt eine Anwendung von machine oder deep learning, im Besonderen zum Erlernen einer latenten Repräsentation des Bildes oder der Bildmerkmale, z.B. einem Encoding. Dabei ist ein Bild der Input für ein neuronales Netzwerk, welches als Output ein sog. encoding (Vektor mit n Elementen) liefert. Eine Bildähnlichkeit wird anhand der Differenz der jeweiligen Vektoren/Encoding bestimmt. Ein Match liegt bei einer kleinen Differenz vor. Alternativ dazu kann die Bildähnlichkeit durch die Anwendung eines sog. siamese network bestimmt werden, bei welchem die Bilder Input sind und als Output ein Ähnlichkeitsmass erfolgt.

Es wird zumindest eines der hinterlegten Bilder 4a-4c ermittelt, welches ähnlich ist bzw. korrespondierende Objektpunkte P1, P2, P3 aufweist.

Die Identifikation übereinstimmender Punkte P1, P2, P3 kann dabei auf feature matching basieren, z.B. durch Anwendung eines SIFT-, SURF-, ORB- und/oder FAST-Algorithmus und/oder auf ein deep-learning basierendes feature encoding.

Besagte image-encoding-Vektoren oder auch Vergröberungen/Verkleinerungen (Thumbnails) der herangezogenen Bilder 4a-4c bzw. I bilden optional anstelle der "Original"-Bilddateien den Bildfundus zum Matching. Das Verwenden von heruntergerechneten oder vergröberten Bilddarstellungen hat den Vorteil eines geringeren Datenaufkommens, was schnellere Datenübertragung und/oder Prozessierung ermöglicht. Das geringere Datenaufkommen wird beispielsweise derart genutzt, das im Speicher des Vermessungsgeräts die Datenbank der 3D-Scan-Panoramabilder in Form der kleinen Bilddateien gespeichert ist und die unkomprimierten Referenzbilder (nur) auf einem externen Speicher (so dass ein relativ kleiner Speicherplatz auf dem Gerät selbst ausreichend ist), woher dann gezielt einzelne (anhand der kleinen 3D-Scan-Panoramabilder) gematchte Bilder in Originalformat/-grösse heruntergeladen werden.

Das Matching kann dabei auch als mehrstufiger Prozess erfolgen, indem zuerst unter Verwendung derartiger Bilder geringer Datengrösse eine erste Auswahl aus den hinterlegten 3D-Panoramabildern 4a-c erfolgt, und dann anhand der vollständigen, unkomprimierten 3D-Panoramabildern 4a-c der Auswahl ein weiteres Matching erfolgt, bei dem Miss-Matches aussortiert werden. Mit anderen Worten erfolgt ein erstes grobes Matchen mit der Gesamtmenge der verkleinerten Bildern zum Erstellen einer Untermenge an vorausgewählten Bildern und dann ein feines Matchen mit den "Original"-Bildern dieser Untermenge.

Im Beispiel nach Figur 5 werden aus den drei vorhandenen Bildern zwei Bilder 4a, 4b identifiziert, die übereinstimmende Objektpunkte P1, P2, P3 aufweisen. Falls das image matching wie oben als eine Möglichkeit beschrieben z.B. über image encoding erfolgt und somit nicht bereits durch bzw. für das image matching korrespondierende Objektpunkte P1, P2, P3 ermittelt sind, erfolgt ein Ermitteln korrespondierender Objektpunkte P1, P2, P3 -z.B. mittels feature matching- als zusätzlicher Schritt (nur) für die bereits als passend ermittelten Bilder 4a, 4b. Sind die Matches der Bilder 4a, 4b mit dem aufgenommenen Bild I also beispielsweise unter Verwendung eines siamese network gefunden, werden übereinstimmende Punkte P1-P3 zwischen den gematchten Bildern 4a und I bzw. Bild 4b und I basierend auf feature detection und matching identifiziert.

Die übereinstimmenden Objektpunkte P1-P3 werden jedenfalls wie nachfolgend beispielhaft beschrieben anschliessend zur Berechnung von Position und Ausrichtung am Standort S verwendet

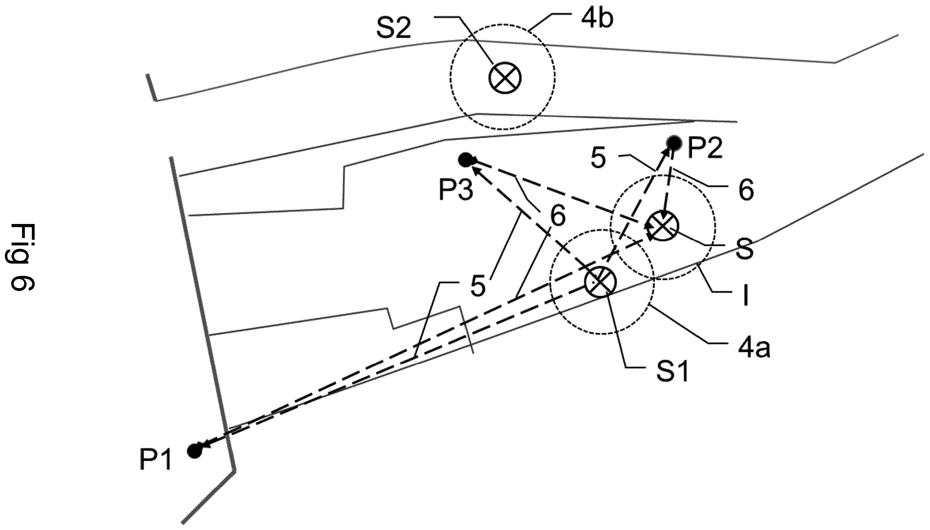

Figur 6 zeigt schematisch die den aktuellen Standort S mit dem dort aufgenommenen 2D-Panoramabild I sowie die beiden Referenzstandort S1 und S2, zu denen die Referenz-3D-Scan-Panoramabilder 4a und 4b vorliegen. Ebenfalls dargestellt sind zum aktuellen Bild I übereinstimmenden Objektpunkte P1-P3, wobei das Referenzbild 4a drei mit dem aktuellen Bild I korrespondierende Objektpunkte P1-P3 aufweist und das Referenzbild 4b einen Punkt P1.

Da die Referenzbilder 4a-4c 3D-Scan-Bilder sind, können für alle Objektpunkte P1-P3 aus den jeweiligen Bilddaten deren 3D-Koordinaten bestimmt werden. Beispielsweise werden aus der Position eines jeweiligen Punkts P1-P3 im Bild 4a der horizontale und der vertikale Winkel berechnet. Zusammen mit dem Entfernungswert aus dem Tiefenkanal und unter Berücksichtigung der Position und Ausrichtung des Bilds 4a werden dann die (georeferenzierten) 3D-Koordinaten (X,Y,Z) des jeweiligen Punkts P1-P3 berechnet (in der Figur 6 andeutet durch die Pfeile 5). Je nach Art der Hinterlegung der 3D-Scan-Panoramabilder 4a, 4b bzw. je nach deren Typ kann alternativ ein Bestimmen der jeweiligen georeferenzierten 3D-Punktkoordinaten z.B. auch durch Nachschlagen in einer Tabelle erfolgen, in der beispielsweise zu einem jeweiligen Bildpunkt die 3D-Koordinaten zugeordnet sind.

Anhand der georeferenzierten 3D-Punktkoordinaten und anhand der Bildposition der jeweiligen (korrespondierenden) Punkte P1-P3 im aktuellen Bild I werden dann Position und Orientierung des Laserscanners berechnet. Diese Berechnung erfolgt beispielsweise durch Rückwärtsschnitt, wie in der Figur 6 beispielhaft durch die Pfeile 6 angedeutet.

Wie in der Figur 6 dargestellt, erfolgt im Beispiel das Bestimmen von Position und Ausrichtung des Laserscanners bzw. des Standorts S nur anhand der einen Referenz S1, ohne Heranziehung des ebenfalls identifizierten zweiten 3D-Scan-Bilds 4b des weiteren Referenzstandorts S2. Optional werden abweichend von der Darstellung alle identifizierten 3D-Scan-Panoramabilder 4a, 4b bzw. die verfügbaren korrespondierenden Punkte P1-P3 aller identifizierten Referenzbilder 4a, 4b zur Positions- bzw. Orientierungsberechnung herangezogen, beispielsweise bis zu einer definierten Maximalanzahl.

Als weitere, bevorzugte Option erfolgt automatisch eine situative Anpassung der zur Standortberechnung herangezogenen Anzahl an 3D-Scan-Panoromabildern 4a, 4b bzw. Referenzen S1, S2. Im vorliegenden Beispiel liegt die Situation vor, dass der aktuelle Standort S nahe am Referenzstandort S1 ist. In beiden gematchten Bildern I, 4a wird eine vergleichsweise grosse Anzahl an übereinstimmenden Punkten ermittelt, z.B. hundert oder mehr Punkte, zumal von beiden Standorten S, S1 aus Rundumbilder vorliegen. Die grosse Anzahl an Punkten, von denen beispielhaft drei P1-P3 dargestellt sind, erlaubt bereits ein robustes und genaues Berechnen der aktuellen Position und Ausrichtung, zumal Punkte auswählbar sind, deren 3D-Koordinaten deutlich unterschiedlich sind.

Ein Vorteil einer automatischen Adaption der zur Standortbestimmung herangezogenen Referenzdatenmenge an die Gegebenheiten bzw. Erfordernisse ist, dass ein optimal angepasster Aufwand betrieben wird. Anders formuliert, kann somit sichergestellt werden, dass so viel (Prozess-)Aufwand betrieben wird wie nötig und gleichzeitig so wenig wie möglich (was besonders für mobile Geräte wie einen Laserscanner mit beschränkter elektrischer und rechnerischer Kapazität von Vorteil ist). Es werden genau soviele 3D-Scan-Panoramabilder wie angesichts der Messsituation erforderlich herangezogen. Beispielsweise lässt sich somit das Verfahren daran anpassen, ob die Position und Orientierung des Scanners in engen, verwinkelten Räumen oder in freien, weiten Hallen oder offenem Gelände erfolgt.

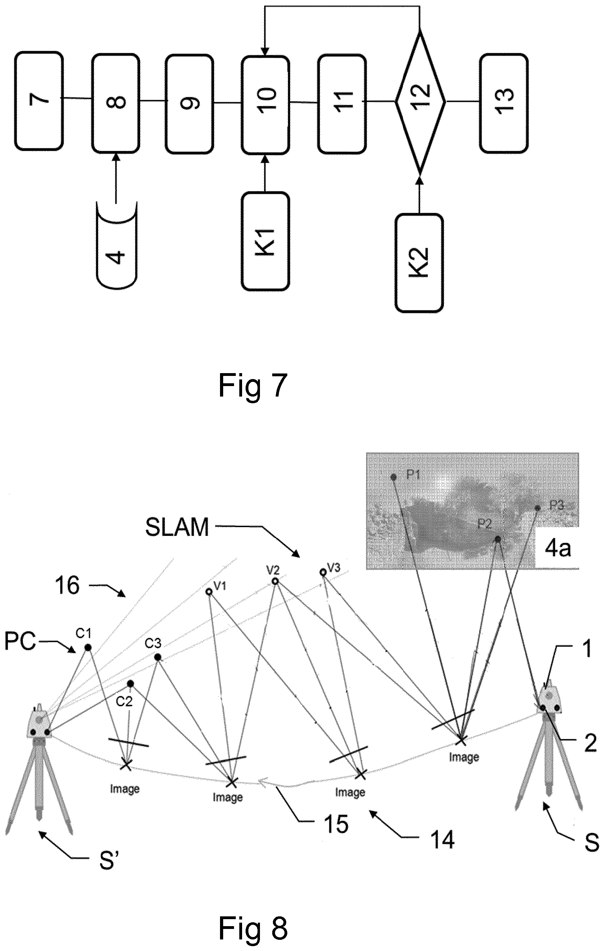

Die Figur 7 erläutert das Verfahren mit der oben beschriebenen automatischen Anpassung der Anzahl der zur Standortbestimmung heranzuziehenden hinterlegten 3D-Scan-Panoromabilder an die aktuelle Messsituation weiter.

Gemäss des Verfahrens wird im Schritt 7 am aktuellen, zu bestimmenden Standort mit der aktuellen Position und der aktuellen Ausrichtung ein Panoramabild aufgenommen. Im Schritt 8 erfolgt ein Matchen dieses aufgenommenen Panoramabilds mit dem Satz hinterlegter 3D-Scan-Panoramabilder 4, wobei im Beispiel mehrere der gespeicherten 3D-Scan-Panoramabildern identifiziert werden (Schritt 9), welche zum aufgenommenen Bild übereinstimmende Punkte bzw. Bildmerkmale aufweisen.

Im Schritt 10 wird anhand eines vorgegebenen ersten Kriteriums K1 die Anzahl der zur eigentlichen Positionsbestimmung heranzuziehenden Referenzbilder als Anpassung an die konkrete Messsituation ermittelt.

Das Kriterium K1 ist beispielsweise ein Mass für die Ähnlichkeit des aktuellen Panoramabilds mit einem oder mehreren der hinterlegten Panoramabilder. Wird z.B. ein hohes Mass an Ähnlichkeit festgestellt, wird die Anzahl der zur Standortbestimmung heranzuziehenden Referenzbilder klein gehalten, z.B. auf ein Bild beschränkt. Wird dagegen ein geringes Mass an Übereinstimmung festgestellt, wird eine vergleichsweise grosse Zahl an Referenzbildern herangezogen, z.B. die maximal verfügbare Anzahl an Matches.

Das Ähnlichkeitsmass basiert beispielsweise auf der Zahl an korrespondierenden Objektpunkten, welche in einem jeweiligen Referenzbild mit dem aufgenommenen Bild übereinstimmen. Alternativ oder zusätzlich wird zur Ermittlung der Ähnlichkeit die Art der übereinstimmenden features als Kriterium herangezogen. Beispielsweise kann anhand von Bild-Deskriptoren, die z.B. dominante Linien im Bild beschreiben, herangezogen werden. Auch kann ein Mass an Ähnlichkeit anhand von Eigenschaften ermittelt werden, welche die jeweiligen Bilder als Ganzes beschreiben bzw. statistische Bildeigenschaften, z.B. Grauwert- oder Farbhistogramme oder Gradienten oder Funktionen von Helligkeit oder Flächennormalen. Weiters kann das Ähnlichkeitsmass K1 auf ein deep-learning basierendes encoding des Bildes oder auf einem mit siamese network ermittelten Ähnlichkeitsmass basieren.

Ein solches Ähnlichkeitsmass K1 -oder anders herum gesehen Unterschiedsmass- kann auch ein Mass sein für einen Lageunterschied zwischen aktuellem Standort und Referenzposition. Das Ähnlichkeitsmass K1 ist dann derart vorgegeben, dass damit zumindest grob eingeordnet werden kann, ob der aktuelle Standort nahe an einem (jeweiligen) Referenzstandort liegt oder nicht. Bei einer Nähe kann wiederum die Anzahl der heranzuziehenden 3D-Scan-Bilder begrenzt werden, z.B. kann nur das Bild (bzw. die zugehörigen identifizierten 3D-Punktkoordinaten) des nahen Referenzstandorts zur Standortberechnung herangezogen werden. Wird hingegen anhand des Ähnlichkeitsmass K1 ermittelt, dass kein naher Referenzstandort verfügbar ist, wird die Anzahl der heranzuziehenden Referenzbilder z.B. auf 3, 5 oder 10 eingestellt.

Nach Adaption der Referenzbilderanzahl im Schritt 10 wird im Schritt 11 anhand der 3D-Koordinaten der Objektpunkte des oder der ausgewählten Referenzbilder und deren Lagen in den Bildern die Position und Ausrichtung der aktuellen Stationierung wir oben beschrieben berechnet und das Verfahren beendet (Schritt 13; zu Schritt 12 siehe unten).

Ein weiteres Beispiel für ein Adaptionskriterium K1 ist eine Eigenschaft der Standortumgebung, also ein Kriterium K1, welches eine Beschaffenheit der Messumgebung beschreibt. Beispielsweise wird die Distanz zu Objektpunkten überprüft (z.B. geringste vorkommende gemessene Entfernung oder eine mittlere Entfernung) und bei grossen Distanzen eine grössere Anzahl an heranzuziehenden Referenzbilder eingestellt als bei kleinen Distanzen. Die Entfernungen zu den Scanpunkten bzw. zu Scanobjekten kann beispielsweise Indikator dafür sein, ob es sich bei der Messumgebung um ein freies Gelände oder einen weiten Raum handelt, bei dem relativ viele identifizierte Bilder zur Referenzierung möglich bzw. nötig sind; oder ob es sich um ein verwinkeltes Gelände oder einen engen Raum handelt, bei dem wenige Bilder zur Referenzierung möglich bzw. nötig sind. Eine Beschaffenheit der jeweiligen Standortumgebung kann alternativ oder zusätzlich bereits in einem jeweiligen 3D-Scan-Panoramabild konnotiert und direkt abrufbar sein, z.B. als Meta-Daten.

Auch können Entfernungen zu Objektpunkten auch auf den aktuellen Standort bezogen sein und beispielsweise nach Berechnung der aktuellen Position und Ausrichtung berücksichtigt werden, so dass ggf. erst nach Schritt 11 eine Adaption der Referenzbilderanzahl erfolgt, falls anhand des Kriteriums K1 festgestellt wird, dass für ein hinsichtlich der Messumgebungsbeschaffenheit optimales Ergebnis erst mit einer erhöhten Anzahl an Referenzbildern möglich ist.

Eine derartige Regelung der Referenzbilderanzahl, welche zur Standortberechnung dient, kann -wie in der Figur 7 dargestellt- optional auch anhand eines weiteren Kriteriums K2 erfolgen. Bei einem solchen zweiten Kriterium handelt es sich beispielsweise um ein Mass für die Präzision der im Schritt 11 berechneten Position und/oder Ausrichtung. Wird festgestellt, dass die Genauigkeit nicht das Kriterium K2 erfüllt (Schritt 12), wird zurück zu Schritt 10 gegangen und die Anzahl der heranzuziehenden Bilder erhöht und damit angepasst. Es werden bei dieser Option also falls erforderlich noch mindestens ein zweites 3D-Scan-Panoramabild herangezogen. Wird aufgrund der Heranziehung eines weiteren Referenzstandorts bzw. von weiteren 3D-Objektpunktkoordinaten der aktuelle Standort ausreichend präzise bestimmt, ist mit Schritt 13 das Standortbestimmungsverfahren beendet, so dass z.B. anschliessend automatisch ein Scanvorgang vom nun bekannten Standort erfolgen kann.

Figur 8 zeigt eine Weiterbildung des erfindungsgemässen Verfahrens. In dieser Fortbildung wird anhand ein für den Standort S identifiziertes 3D-Scan-Panoramabild 4a als Ausgangspunkt genutzt, um mittels eines SLAM-Prozesses (Simultaneous Localization And Mapping) eine Punktwolke PC an einem weiteren Standort S' zu registrieren. Hierbei wird der Laserscanner 1 vom aktuellen Standort S, für den wenigstens ein 3D-Scan-Panoramabild 4a wie zuvor beschrieben identifiziert ist, entlang eines Pfades (symbolisiert durch Pfeil 15) zum weiteren Standort S' bewegt. Entlang des Pfades 15 bis zum Endort S' werden mittels der Kamera 2 des Vermessungsgeräts 1 eine Serie von Bildern 14 aufgenommen, z.B. durch fortlaufendes Fotografieren oder auch in Form eines Videos. Das 3D-Scan-Panoramabild 4a wird hierbei als Teil der Bilderserie 14 integriert. Die Bilddaten der Bilderserie 14 werden in an sich bekannter Weise mittels eines SLAM-Algorithmus derart verarbeitet, dass eine räumliche Verknüpfung untereinander erfolgt, wodurch - ausgehend vom 3D-Scan-Panormabild 4a als Startbildschliesslich das letzte, am weiteren Standort S' aufgenommene Bild in räumlichen Bezug (Position und Orientierung) zum Startbild 4a gesetzt werden kann.

Wie in Figur 8 beispielhaft angedeutet, werden beispielsweise Punkte P1-P3 des 3D-Scan-Panoramabilds 4a, welche im ersten nachfolgenden Kamerabild ebenfalls erkannt werden, für den SLAM-Prozess herangezogen sowie Punkte V1-V3, die jeweils in nachfolgenden Bildern korrespondieren als auch schliesslich Punkte C1-C3.

Diese letztgenannten Punkte C1-C3 haben neben Korrespondenzen innerhalb der Bilderserie 14 zudem Korrespondenzen in der Punktwolke PC, die am Standort S' -zusätzlich zum Kamerabild - mittels Scan aufgenommen wird (symbolisiert durch Striche 16). Somit lässt sich letztendlich auch die Punktwolke PC in räumlichen Bezug zum 3D-Scan-Panoramabild 4a setzen bzw. relativ zu diesem registrieren.

Dass mit einem 3D-Scan-Panoramabild 4a gleichzeitig und verknüpft ein Kamerabild und eine 3D-Punktwolke vorliegt, wird also vorteilhaft zur Registrierung zweier Punktwolken genutzt, indem das Kamerabild in einem SLAM-Prozess als erster "Pfeiler" einer "Brücke" (Bilderserie 14) verwendet wird, mit welcher die neue Punktwolke PC mit der bekannten, durch irgendeinen vergangenen Scan erstellten, 3D-Punktwolke des 3D-Scan-Panoramabilds 4a verbunden wird.

Die Korrespondenzen zwischen den Bildern der Bilderserie 14 inklusive des 3D-Scan-Panoramabils 4a werden dabei beispielsweise mittels feature matching ermittelt. Dagegen kann die Zuordnung der Punkte C1-C3 der Punktwolke PC zum Kamerabild des letzten Bilderserienbilds (Kamerabild des Standorts S') auch "einfacher" ohne image matching erfolgen, wenn eine Kalibrierung von Kamera 2 zum Scanmodul des Vermessungsgeräts 1 vorliegt, was normalerweise der Fall ist.

Es versteht sich, dass diese dargestellten Figuren nur mögliche Ausführungsbeispiele schematisch darstellen. Die verschiedenen Ansätze können erfindungsgemäss ebenso miteinander sowie mit Geräten und Verfahren des Stands der Technik kombiniert werden.

## Patentansprüche

1. Vollautomatisches Verfahren zum Bestimmen der aktuellen georeferenzierten Position und Ausrichtung eines terrestrischen Vermessungsgeräts mit Scanfunktionalität (1) am aktuellen Standort (S) anhand eines Satzes von hinterlegten georeferenzierten 3D-Scan-Panoramabildern (4, 4a-c), also Panoramabilder, die mittels Scan auch 3D-Koordinatendaten repräsentieren und optische Bilddaten und mit den Bilddaten punktgetreu verknüpfte Entfernungsdaten bereitstellen, mit
• Aufnehmen (7) eines Panoramabilds (I) mit dem Vermessungsgerät vom aktuellen Standort (S) aus, wobei im aufgenommenen Panoramabild (I) eine Vielzahl von Objektpunkten abgebildet ist,
• Identifizieren (9) wenigstens eines 3D-Scan-Panoramabilds (4a, b) mit zum aufgenommenen Panoramabild (I) übereinstimmenden Objektpunkten (P1, P2, P3) mittels image matching (8) mit dem Satz hinterlegter georeferenzierten 3D-Scan-Panoramabildern (4, 4a-c),
• Bestimmen der jeweiligen georeferenzierten 3D-Koordinaten der übereinstimmenden Objektpunkte (P1, P2, P3) anhand des identifizierten 3D-Scan-Panoramabilds (4a, b) aus dessen Bilddaten und
• Berechnen (11) der aktuellen georeferenzierten Position und Ausrichtung des Vermessungsgeräts (1) anhand der Positionen der übereinstimmenden Objektpunkte (P1, P2, P3) im aufgenommenen Panoramabild (I) und deren bestimmten georeferenzierten 3D-Koordinaten.

2. Verfahren nach Anspruch 1,
**dadurch gekennzeichnet, dass**
die hinterlegten 3D-Scan-Panoramabilder (4, 4a-c) jeweils auf 2D- Panoramabildern und zugehörigen 3D-Punktwolken basieren und/oder das aufgenommene Panoramabild (I) ein 2D-Bild ist.

3. Verfahren nach Anspruch 1 oder 2,
**dadurch gekennzeichnet, dass**
die hinterlegten 3D-Scan-Panoramabilder (4, 4a-c) jeweils auf Digitalfotografie basierende Farbkanäle (C) und einen auf Laserscan basierenden Tiefenkanal (D) aufweisen.

4. Verfahren nach einem der vorherigen Ansprüche,
**dadurch gekennzeichnet, dass**
die hinterlegten 3D-Scan-Panoramabilder (4, 4a-c) in Form von Würfel- oder Kugelprojektionen vorliegen.

5. Verfahren nach einem der vorherigen Ansprüche,
**dadurch gekennzeichnet, dass**
es sich bei dem Satz hinterlegter 3D-Scan-Panoramabilder (4, 4a-c) um räumlich untereinander verknüpfte Abbildungen eines eine Einheit bildenden Umgebungsbereichs (100), insbesondere eine Industrieanlage, ein Gebäude oder ein Gebäudekomplex, handelt.

6. Verfahren nach einem der vorherigen Ansprüche,
**dadurch gekennzeichnet, dass**
im Rahmen des Verfahrens
• vom aktuellen Standort (S) aus das Vermessungsgerät (1) entlang eines Pfades (15) zu einem weiteren Standort (S') bewegt wird,
• während der Bewegung (15) mit dem Vermessungsgerät (1) im Rahmen eines SLAM-Prozesses kontinuierlich eine Serie (14) von Bildern aufgenommen wird, wobei das identifizierte 3D-Scan-Panoramabild (4a, b) als ein, insbesondere das erste, Bild der Bilderserie (14) herangezogen wird,
• die Bilderserie (14) des SLAM Prozesses durch Aufnehmen eines letzten Bilds am weiteren Standort (S') abgeschlossen wird,
• eine 3D-Punktwolke (PC) am weiteren Standort (S') mittels des Vermessungsgeräts (1) aufgenommen wird,
• die 3D-Punktwolke (PC) basierend auf dem SLAM Prozess relativ zum identifizierten 3D-Scan-Panoramabild (4a, b) registriert wird.

7. Verfahren nach einem der vorherigen Ansprüche,
**dadurch gekennzeichnet, dass**
automatisch die Anzahl der zur Standortberechnung heranzuziehenden hinterlegten 3D-Scan-Panoramabilder (4, 4a-c) situativ an die vorliegende Messsituation angepasst wird (10).

8. Verfahren nach Anspruch 7,
**dadurch gekennzeichnet, dass**
im Rahmen der Anpassung die Anzahl der zur Standortberechnung heranzuziehenden hinterlegten 3D-Scan-Panoromabilder (4, 4a-c) eingestellt wird abhängig von einem Ähnlichkeitsmass (K1) zwischen aufgenommenem Panoramabild (I) und identifiziertem 3D-Scan-Panoromabild (4a, b), insbesondere wobei das Ähnlichkeitsmass (K1) auf einer Anzahl an übereinstimmenden Objektpunkten (P1, P2, P3) basiert.

9. Verfahren nach Anspruch 8,
**dadurch gekennzeichnet, dass**
das Ähnlichkeitsmass (K1) ein Mass für die Nähe zwischen aktuellem Standort (S) und Aufnahmestandort (S1, S2) des jeweiligen identifizierten 3D-Scan-Panoramabilds (4a, b) darstellt.

10. Verfahren nach einem der Ansprüche 7 bis 9,
**dadurch gekennzeichnet, dass**
im Rahmen der Anpassung die Anzahl der zur Standortberechnung heranzuziehenden hinterlegten 3D-Scan-Panoramabilder (4, 4a-c) eingestellt wird abhängig von einer anhand des aufgenommenen Panoramabilds (I) bestimmten Mindestdistanz oder mittlere Distanz zu Objektpunkten und/oder Beschaffenheit der Umgebung des aktuellen Standorts (S), welche in einem jeweiligen 3D-Scan-Panoramabild als direkt abrufbare Meta-Daten konnotiert ist.

11. Verfahren nach einem der Ansprüche 7 bis 10,
**dadurch gekennzeichnet, dass**
im Rahmen der Anpassung die Anzahl der zur Standortberechnung heranzuziehenden hinterlegten 3D-Scan-Panoramabilder (4, 4a-c) eingestellt wird abhängig von einem gewünschten Präzisionsmass (K2) für die zu bestimmende Position und/oder Ausrichtung (12).

12. Verfahren nach einem der vorherigen Ansprüche,
**dadurch gekennzeichnet, dass**
das image matching (8) auf machine learning und oder deep learning basiert und/oder im Rahmen des Verfahrens übereinstimmende Objektpunkte mittels feature matching-Algorithmen, insbesondere anhand von SIFT-, SURF-, ORB oder FAST-Algorithmen, ermittelt werden.

13. Verfahren nach einem der vorherigen Ansprüche,
**dadurch gekennzeichnet, dass**
das Berechnen des aktuellen Standorts (S) mittels Rückwärtsschnitt erfolgt.

14. Terrestrisches Vermessungsgerät (1) mit Scanfunktionalität und einer Steuer- und Auswerteeinheit welche derart ausgebildet ist, dass damit das Verfahren nach einem der Ansprüche 1 bis 13 ausführbar ist.

15. Computerprogrammprodukt, das auf einem maschinenlesbaren Träger, insbesondere eines terrestrischen Vermessungsgeräts (1), gespeichert ist, oder Computer-Datensignal, verkörpert durch eine elektromagnetische Welle, mit Programmcode, wobei das Computerprogrammprodukt bzw. der Programmcode geeignet ist zur Durchführung des Verfahrens nach einem der Ansprüche 1 bis 13.

## Claims

1. Fully automatic method for determining the current, geo-referenced position and alignment of a terrestrial surveying device with scan functionality (1) at the current location (S) on the basis of a set of stored, geo-referenced 3D scan panoramic images (4, 4a-c), i.e. panoramic images that also represent 3D coordinate data by means of a scan and provide optical image data and distance data linked to the image data true to point, with
• recording (7) of a panoramic image (I) with the surveying device from the current location (S), wherein a large number of object points are represented in the recorded panoramic image (I),
• identifying (9) at least one 3D scan panoramic image (4a, b) with object points (P1, P2, P3) corresponding to the recorded panoramic image (I) by means of image matching (8) with the set of stored, georeferenced 3D scan panoramic images (4, 4a-c),
• determining the respective geo-referenced 3D coordinates of the corresponding object points (P1, P2, P3) on the basis of the identified 3D scan panoramic image (4a, b) and
• calculating (11) the current geo-referenced position and alignment of the surveying device (1) on the basis of the positions of the corresponding object points (P1, P2, P3) in the recorded panoramic image (I) and of their determined geo-referenced 3D coordinates.

2. Method according to Claim 1,
**characterized in that**
the stored 3D scan panoramic images (4, 4a-c) are each based on 2D panoramic images and associated 3D point clouds and/or the recorded panoramic image (I) is a 2D image.

3. Method according to Claim 1 or 2,
**characterized in that**
the stored 3D scan panoramic images (4, 4a-c) each comprise color channels (C) based on digital photography and a depth channel (D) based on laser scanning.

4. Method according to one of the preceding claims,
**characterized in that**
the stored 3D scan panoramic images (4, 4a-c) are present in the form of cubic or spherical projections.

5. Method according to one of the preceding claims,
**characterized in that**
the set of stored 3D scan panoramic images (4, 4a-c) comprises spatially interlinked images of a surrounding region (100) forming a unit, in particular an industrial installation, a building or a building complex.

6. Method according to one of the preceding claims,
**characterized in that**
in the context of the method
• the surveying device (1) is moved from the current location (S) along a path (15) to a further location (S'),
• during the movement (15) a series (14) of images is continuously recorded with the surveying device (1) in the context of a SLAM process, wherein the identified 3D scan panoramic image (4a, b) is employed as an image (particularly the first image) of the image series (14),
• the image series (14) of the SLAM process is completed by recording a final image at the further location (S'),
• a 3D point cloud (PC) is recorded at the further location (S') by means of the surveying device (1),
• the 3D point cloud (PC) is registered on the basis of the SLAM process relative to the identified 3D scan panoramic image (4a, b).

7. Method according to one of the preceding claims,
**characterized in that**
the number of stored 3D scan panoramic images (4, 4a-c) to be employed for the location determination is adjusted (10) to the existing measurement situation.

8. Method according to Claim 7,
**characterized in that**
in the context of the adjustment, the number of stored 3D scan panoramic images (4, 4a-c) to be used for the location determination is set depending on a measure of the similarity (K1) between the recorded panoramic image (I) and the identified 3D scan panoramic image (4a, b), in particular wherein the measure of similarity (K1) is based on a number of corresponding object points (P1, P2, P3).

9. Method according to Claim 8,
**characterized in that**
the measure of similarity (K1) represents a measure for a difference in position between the current location (S) and the recording location (S1, S2) of the respective, identified 3D scan panoramic image (4a, b).

10. Method according to any one of Claims 7 to 9,
**characterized in that**
in the context of the adjustment, the number of stored 3D scan panoramic images (4, 4a-c) to be used for the location determination is set depending on a minimum distance or average distance to object points and/or characteristic of the environment of the current location (S) determined on the basis of the recorded panoramic image (I), which is connoted in a respective 3D scan panorama image as directly retrievable meta data.

11. Method according to one of Claims 7 to 10,
**characterized in that**
in the context of the adjustment, the number of stored 3D scan panoramic images (4, 4a-c) to be used for the location determination is set
depending on a desired degree of precision (K2) for the position and/or alignment (12) that are to be determined.

12. Method according to one of the preceding claims,
**characterized in that**
the image matching (8) is based on machine learning and/or deep learning, and/or that in the context of the method corresponding object points are determined by means of feature matching algorithms, in particular on the basis of SIFT, SURF, ORB or FAST algorithms.

13. Method according to one of the preceding claims,
**characterized in that**
the calculation of the current location (S) takes place by means of re-sectioning.

14. Terrestrial surveying device (1) with scan functionality and with a control and evaluation unit that is configured in such a way that the method according to any one of Claims 1 to 13 can be carried out with it.

15. Computer program product that is stored on a machine-readable carrier, in particular of a terrestrial surveying device (1), or a computer data signal, embodied by an electromagnetic wave, with program code, wherein the computer program product or the program code are suitable for carrying out the method according to any one of Claims 1 to 13.

## Revendications

1. Procédé entièrement automatisé pour déterminer la position géoréférencée et l'orientation actuelles d'un appareil d'arpentage terrestre avec fonctionnalité de balayage (1) à l'emplacement actuel (S) à l'aide d'un ensemble d'images panoramiques de balayage 3D géoréférencées enregistrées (4, 4a-c), c'est-à-dire d'images panoramiques qui, au moyen d'un balayage, représentent également des données de coordonnées 3D et fournissent des données d'images optiques et des données de distance liées point par point aux données d'images, consistant à :
• acquérir (7) une image panoramique (I) avec l'appareil d'arpentage à partir de l'emplacement actuel (S), l'image panoramique acquise (I) représentant un grand nombre de points d'objet,
• identifier (9) au moins une image panoramique de balayage 3D (4a, b) avec des points d'objet (P1, P2, P3) qui concordent avec l'image panoramique acquise (I) au moyen d'une mise en correspondance d'images (8) avec l'ensemble d'images panoramiques de balayage 3D géoréférencées enregistrées (4, 4a-c),
• déterminer les coordonnées 3D géoréférencées respectives des points d'objet concordants (P1, P2, P3) à l'aide de l'image panoramique de balayage 3D identifiée (4a, b) à partir de ses données d'image et
• calculer (11) la position géoréférencée et l'orientation actuelles de l'appareil d'arpentage (1) à l'aide des positions des points d'objet concordants (P1, P2, P3) dans l'image panoramique enregistrée (I) et de leurs coordonnées 3D géoréférencées déterminées.

2. Procédé selon la revendication 1,
**caractérisé en ce que**
les images panoramiques de balayage 3D enregistrées (4, 4a-c) sont chacune basées sur des images panoramiques 2D et des nuages de points 3D associés et/ou l'image panoramique acquise (I) est une image 2D.

3. Procédé selon la revendication 1 ou 2,
**caractérisé en ce que**
les images panoramiques de balayage 3D enregistrées (4, 4a-c) présentent chacune des canaux de couleur (C) basés sur la photographie numérique et un canal de profondeur (D) basé sur le balayage laser.

4. Procédé selon l'une des revendications précédentes,
**caractérisé en ce que**
les images panoramiques de balayage 3D enregistrées (4, 4a-c) se présentent sous la forme de projections cubiques ou sphériques.

5. Procédé selon l'une des revendications précédentes,
**caractérisé en ce que**
l'ensemble d'images panoramiques de balayage 3D enregistrées (4, 4a-c) est constitué de représentations spatialement liées entre elles d'une zone environnante (100) formant une unité, en particulier une installation industrielle, un bâtiment ou un complexe de bâtiments.

6. Procédé selon l'une des revendications précédentes,
**caractérisé en ce que**
dans le cadre du procédé,
• l'appareil d'arpentage (1) est déplacé de l'emplacement actuel (S) vers un autre emplacement (S') le long d'un chemin (15),
• pendant le déplacement (15), une série (14) d'images est continuellement acquise avec l'appareil d'arpentage (1) dans le cadre d'un processus SLAM, l'image panoramique de balayage 3D identifiée (4a, b) étant utilisée comme une image, en particulier la première image, de la série d'images (14),
• la série d'images (14) du processus SLAM est achevée par l'acquisition d'une dernière image à l'autre emplacement (S'),
• un nuage de points 3D (PC) est acquis à l'autre emplacement (S') au moyen de l'appareil d'arpentage (1),
• le nuage de points 3D (PC) est enregistré par rapport à l'image panoramique de balayage 3D identifiée (4a, b) sur la base du processus SLAM.

7. Procédé selon l'une des revendications précédentes,
**caractérisé en ce que**
le nombre d'images panoramiques de balayage 3D enregistrées (4, 4a-c) à utiliser pour le calcul de l'emplacement est automatiquement adapté à la situation de mesure existante (10).

8. Procédé selon la revendication 7,
**caractérisé en ce que**
dans le cadre de l'adaptation, le nombre d'images panoramiques de balayage 3D enregistrées (4, 4a-c) à utiliser pour le calcul de l'emplacement est ajusté en fonction d'une mesure de similitude (K1) entre l'image panoramique acquise (I) et l'image panoramique de balayage 3D identifiée (4a, b), en particulier dans lequel la mesure de similitude (K1) est basée sur un nombre de points d'objet concordants (P1, P2, P3).

9. Procédé selon la revendication 8,
**caractérisé en ce que**
la mesure de similitude (K1) représente une mesure de la proximité entre l'emplacement actuel (S) et l'emplacement d'acquisition (S1, S2) de l'image panoramique de balayage 3D identifiée (4a, b) respective.

10. Procédé selon l'une des revendications 7 à 9,
caractérisé en que
dans le cadre de l'adaptation, le nombre d'images panoramiques de balayage 3D enregistrées (4, 4a-c) à utiliser pour le calcul de l'emplacement est ajusté en fonction d'une distance minimale ou d'une distance moyenne par rapport à des points d'objet et/ou de la nature de l'environnement de l'emplacement actuel (S) déterminées à l'aide de l'image panoramique acquise (I), qui sont associées à une image panoramique de balayage 3D respective sous la forme de métadonnées directement accessibles.

11. Procédé selon l'une des revendications 7 à 10,
**caractérisé en ce que**
dans le cadre de l'adaptation, le nombre d'images panoramiques de balayage 3D enregistrées (4, 4a-c) à utiliser pour le calcul de l'emplacement est ajusté en fonction d'une mesure de précision souhaitée (K2) pour la position et/ou l'orientation à déterminer (12).

12. Procédé selon l'une des revendications précédentes,
**caractérisé en ce que**
la mise en correspondance d'images (8) est basée sur l'apprentissage automatique et/ou l'apprentissage profond et/ou dans le cadre du procédé, des points d'objet concordants sont déterminés au moyen d'algorithmes de mise en correspondance de caractéristiques, en particulier au moyen d'algorithmes SIFT, SURF, ORB ou FAST.

13. Procédé selon l'une des revendications précédentes,
**caractérisé en ce que**
le calcul de l'emplacement actuel (S) est effectué par recoupement.

14. Appareil d'arpentage terrestre (1) doté d'une fonctionnalité de balayage et d'une unité de commande et d'évaluation qui est conçue de manière à permettre l'exécution du procédé selon l'une des revendications 1 à 13.

15. Produit programme d'ordinateur, qui est stocké sur un support lisible par machine, en particulier un appareil d'arpentage terrestre (1), ou signal de données d'ordinateur, matérialisé par une onde électromagnétique, avec un code de programme, le produit programme d'ordinateur ou le code de programme étant adapté à mettre en œuvre le procédé selon l'une des revendications 1 à 13.
